Europäisches Patentamt

European Patent Office

Office européen des brevets

(19)

(11) Publication number: **0 185 950**
**B1**

# EUROPEAN PATENT SPECIFICATION

(12)

(45) Date of publication of patent specification: **12.12.90**

(21) Application number: **85115027.6**

(22) Date of filing: **27.11.85**

(51) Int. Cl.⁵: **C 08 L 55/02, C 08 L 51/04, C 08 L 25/08**

(54) **Polymeric polyblend compositions having lightly-grafted rubber-reinforcing particles.**

(30) Priority: **30.11.84 US 676757**

(43) Date of publication of application:
**02.07.86 Bulletin 86/27**

(45) Publication of the grant of the patent:
**12.12.90 Bulletin 90/50**

(84) Designated Contracting States:
**BE DE FR GB IT NL SE**

(56) References cited:
**EP-A-0 052 732**
**FR-A-2 268 832**

(73) Proprietor: **THE DOW CHEMICAL COMPANY**
**2030 Dow Center Abbott Road P.O. Box 1967**
**Midland Michigan 48640-1967 (US)**

(72) Inventor: **Moore, Eugene R.**
**5600 Woodview Pass**
**Midland, MI 48640 (US)**
Inventor: **Lauer, Richard P.**
**2440 N. Jefferson**
**Midland, MI 48640 (US)**
Inventor: **Lefevre, Norman A.**
**3695 E. Boy Scout Road**
**Bay City, MI 48706 (US)**
Inventor: **Brown, Thayer A., Jr.**
**4314 Huron**
**Midland, MI 48640 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

# EP 0 185 950 B1

**Description**

This invention relates to an impact resistant polymeric polyblend composition. Specifically, it relates to a polymeric polyblend composition having lightly-grafted rubber-reinforcing particles.

Impact resistant polymeric compositions are well-known in the prior art. Particularly well-known are those impact resistant polymeric compositions comprising a rubbery-reinforcing polymer dispersed in a rigid phase polymeric composition. Exemplary of such impact resistant polymers are those containing styrene, acrylonitrile, and a reinforcing rubber. These impact resistant compositions comprising styrene, acrylonitrile, and a reinforcing rubber are known in the art as ABS or ABS-type compositions.

These impact resistant compositions can be prepared in a variety of ways. One method of preparation is to polymerize styrene and acrylonitrile in the presence of rubber, for example, by a mass or bulk polymerization process, to obtain a rubber-reinforced styrene/acrylonitrile resin. Alternatively, said polymers can be produced by blending heat-plastified grafted reinforcing rubber with heat-plastified styrene/acrylonitrile resins.

In view of the wide variety of end uses for impact resistant polymeric compositions, it is advantageous to prepare such compositions in a manner in which the level of reinforcing rubber may be readily varied. The blending technique of preparing impact resistant polymeric compositions is particularly desirable since it permits the amount of reinforcing rubber to be easily varied without adjusting complex polymerization conditions. Additionally, the blending technique allows the size and distribution of the rubber-reinforcing particles to be easily varied.

It is similarly well-known in the art that the more rubber-reinforcing polymer there is present in the composition the better the composition's impact resistance, and the lower the composition's gloss. The converse is also true.

EP—A—052732 describes a thermoplastic molding material containing two graft copolymers in a matrix of a copolymer based on a vinylaromatic monomer and an ethylenically unsaturated monomer. The first graft polymer is prepared by solution polymerization and comprises an elastomer phase of a polymeric aliphatic diene or a copolymer of a diene with a vinylaromatic monomer wherein the diene content is from 60 to 85 weight percent and a hard phase grafted thereon being an interpolymer of a vinylaromatic monomer and one or more ethylenically unsaturated monomers copolymerizable therewith.

The second graft copolymer is prepared by emulsion polymerization and comprises an elastomer phase of a polymeric aliphatic diene or a polymeric alkyl acrylate or a copolymer of said diene and alkyl acrylate comprising up to 60 weight percent diene and a hard phase grafted thereon being an interpolymer of a vinylaromatic monomer and one or more ethylenically unsaturated monomers. The second graft copolymer has a bimodale particle distribution in which the diameter of one category of particles is from 0.05 to 0.18 μm and the second category of particles has a mean diameter of from 0.25 to 0.6 μm, especially 0.35—0.50 μm.

Those skilled in the art recognize that enhanced physical properties are achieved if the reinforcing rubber has grafted thereto a rigid phase superstrate. The prior art has taught that in order to recognize the enhanced physical properties achieved by employing a grafted reinforcing rubber, the reinforcing rubber must be grafted to a relatively high level. The amount of grafted reinforcing rubber able to be produced by a given reactor is directly proportional to the level of grafting desired to be achieved. That is, the higher the level of grafting desired the lower the output of the given reactor.

It would be desirable to produce a rubber reinforced impact resistant polymeric composition having enhanced physical properties wherein the reinforcing rubber is grafted to a relatively low level.

The present invention concerns a polymeric polyblend composition comprising from 50 to 99 weight percent based on total weight of the polymeric polyblend composition of a matrix of an interpolymer being polymerized from a first monomer mixture comprising a monovinylidene aromatic monomer and one or more monomers copolymerizable therewith, said matrix having dispersed therein from 1 to 50 weight percent based on total weight of the polymeric polyblend composition a graft copolymer produced through an emulsion polymerization process, said graft copolymer comprising a graftable rubber substrate having grafted thereto an interpolymer, said interpolymer being polymerized from a second monomer mixture comprising a monovinylidene aromatic monomer and one or more monomers copolymerizable therewith, said graft copolymer has a broad particle size distribution wherein relatively small particles have a diameter of from 0.08 μm to 0.2 μm (800 to 2000Å) and relatively large particles have a diameter of from 0.3 μm to 10 μm (3000 to 100000Å), characterized in that the graftable rubber substrate is an interpolymer of 90 to 97 percent by weight butadiene and 3 to 10 percent by weight of acrylonitrile and/or styrene or a styrene derivative and the graft copolymer has a graft:rubber ratio of from 0.1:1 to 0.3:1.

The polymeric polyblend compositions of the present invention comprise at least two different components, a rigid matrix or continuous phase, and an elastomeric phase comprising lightly-grafted rubber-reinforcing particles.

The matrix of the present invention consists mainly of an interpolymer formed from a first monomer mixture comprising a monovinylidene aromatic monomer and one or more monomers copolymerizaqble therewith. The matrix generally comprises at least 60 percent by weight, based on total matrix weight, of the interpolymer, preferably 80 percent by weight, most preferably 96 percent by weight.

When the matrix does not comprise 100 weight percent of the interpolymer, the balance of the matrix can comprise (1) additional polymeric materials, and/or (2) other filler-type material combined with the interpolymer of the matrix, e.g., plasticizers, lubricants, pigments, fillers, flame retardants, etc.

Exemplary of the monovinylidene aromatic monomers suitable for use in the first monomer mixture are styrene; alpha-alkyl monovinylidene monoaromatic compounds (e.g., alpha-methylstyrene, alpha-ethylstyrene, alpha-methylvinyltoluene, alpha-methyl dialkylstyrenes, etc); ring-substituted alkyl styrenes (e.g., ortho-, meta-, and paravinyl toluene, o-ethylstyrene, p-ethylstyrene, 2,4-dimethylstyrene, p-tertiary butylstyrene, etc.); ring-substituted halostyrenes (e.g., o-chlorostyrene, p-chlorostyrene, o-bromostyrene, 2,4-dichlorostyrene, etc.); ring-alkyl, ring-halo-substituted styrenes (e.g., 2-chloro-4-methylstyrene, 2,6-dichloro-4-methylstyrene, etc.); vinyl naphthalene; vinylanthracene; etc. The alkyl substituents generally have 1 to 4 carbon atoms and may include isopropyl and isobutyl groups. If desired, mixtures of one or more of such monovinylidene aromatic monomers may be used.

Exemplary of the monomers copolymerizable with the monovinylidene aromatic monomers are the unsaturated nitriles. Suitable unsaturated nitriles are acrylonitrile, methacrylonitrile, ethacrylonitrile, and mixtures thereof. The unsaturated nitrile is generally present in the interpolymer of the matrix in an amount of from 5 to 50, preferably from 15 to 35 weight percent based on total weight of the interpolymer of the matrix.

Other monomers copolymerizable with the monovinylidene aromatic monomer and suitable for use in the interpolymer of the matrix are the conjugated 1,3-dienes (e.g., butadiene, isoprene, etc.); alpha- or beta-unsaturated monobasic acids and derivatives thereof (e.g., acrylic acid, methyl acrylic acid, ethyl acrylate, butyl acrylate, 2-ethylhexyl acrylate, methacrylic acid, and the corresponding esters thereof such as methyl methacrylate, etc., acrylamide, methacrylamide); alpha-, or beta-unsaturated dicarboxylic acid anhydrides and derivatives thereof (e.g., maleic anhydride, citraconic anhydride, itaconic anhydride, maleimide, citraconimide, itaconimide, etc.); vinyl halides such as vinyl chloride, vinyl bromide, etc; vinylidene chloride, vinylidene bromide, etc.; vinyl esters such as vinyl acetate, vinylpropionate, etc.; dialkyl maleates or fumarates such as dimethyl maleate, diethyl maleate, dibutyl maleate the corresponding fumarates, etc.

The preferred monomers copolymerizable with the monovinylidene aromatic monomer of the interpolymer of the matrix are acrylonitrile and methyl methacrylate.

The interpolymer of the matrix and the interpolymer grafted to the rubber-reinforcing particles may have the same or different compositions. If the interpolymers have different compositions, they must be compatible. For purposes of this invention, the interpolymer of the matrix and the interpolymer graft to the rubber-reinforcing particles are considered compatible if, assuming different glass transition temperatures, a blend of the interpolymers would displace the glass transition temperature of the interpolymer of the matrix. Preferentially, a blend of the interpolymer graft to the rubber reinforcing particles and a compatible interpolymer of the matrix exhibits a single glass transition temperature.

Techniques suitable for producing the interpolymer of the matrix are well-known in the art. Examples of the known polymerization processes include mass, mass-suspension, mass-solution, suspension, and emulsion polymerization processes as well as other modifications and/or combinations of such processes. See, for example, U.S.—A—3,509,237; 3,928,494; 4,221,883; 4,239,863; 4,243,765; and 4,250,271.

The interpolymer of the matrix may be produced in a reaction separate from the reaction used to produce the lightly-grafted rubber-reinforcing particles or, as is well-known in the art, all or part of the interpolymer of the matrix can be formed in the reaction used to produce the lightly-grafted rubber-reinforcing particles. In most instances, the reaction used to produce the lightly-grafted rubber-reinforcing particles inherently produces at least a small amount of the interpolymer of the matrix.

The lightly-grafted rubber-reinforcing particles of the blend of the present invention have a graftable rubber substrate, said graftable rubber substrate having grafted thereto a superstrate of interpolymer.

Various elastomeric materials are suitable for use in forming the graftable rubber substrates of the present invention. Used are interpolymers of elastomeric-material-forming monomers with other copolymerizable monomers.

For the purposes of this invention, a "rubbery polymer" is a polymer having a glass transition temperature not higher than 0°C, preferably not higher than −20°C as determined by ASTM Test D-746-52T. Such rubber polymers include interpolymers of 1,3-butadiene with one or more copolymerizable monoethylenically unsaturated monomers, such as monovinylidene aromatic hydrocarbons (e.g., styrene; a ring-substituted alkyl styrene, such as o-, m- and p-vinyltoluene; 2,4-dimethylstyrene, the ring-substituted ethylstyrenes, p-tert-butylstyrene, etc.; an alpha-alkyl styrene, such as alpha-methylstyrene, alpha-ethylstyrene, alpha-methyl-p-methylstyrene, etc.); ring substituted halo-monovinylidene aromatic hydrocarbons (e.g., o-, m- and p-chlorostyrenes, 2,4-dibromostyrene, 2-methyl-4-chlorostyrene, etc.); acrylonitrile.

The graftable rubber substrates of the present invention are those comprising an interpolymer of 90 to 97 percent by weight butadiene and 3 to 10 percent by weight of acrylonitrile and/or styrene or a styrene derivative as mentioned above.

The graftable rubber substrate may contain up to 2 percent of a cross-linking agent based on weight of the graftable rubber substrate. The cross-linking agent can be any of the agents conventionally used for cross-linking diene rubber. Suitable examples include divinyl benzene, diallyl maleate, diallyl fumarate, diallyl adipate, allyl acrylate, allyl methacrylate, diacrylates, and dimethyl acrylates of polyhydric alcohols (e.g., ethylene glycol dimethacrylate, etc.); and the like.

The graftable rubber substrate of the present invention are suitably prepared through an emulsion polymerization process. Emulsion polymerization processes suitable for use in the present invention are well-known in the art and exemplified by U.S.—A—3,509,238; 3,576,910; 3,644,584; 3,903,200; and 4,009,226.

Typically, the monomers from which the graftable rubber substrates to be formed are emulsified in water with the aid of a micelle-forming emulsifying agent. The resultant aqueous suspension usually contains a suitable water-soluble free-radical generating initiator such as a peroxide or persulfate. Additionally, a modifier or regulator, such as a mercaptan, may be present in small amounts. The modifier acts as a chain transfer agents and limits the growth of the polymer chain.

Suitable emulsifying agents which can be employed in the practice of the present invention include anionic, cationic, and non-ionic emulsifiers customarily used in emulsion polymerization processes. Usually at least one anionic emulsifier is included and one or more non-ionic emulsifiers can also be present.

Representative types of anionic emulsifiers are the alkylaryl sulfonates, alkali metal alkyl sulfates, the sulfonated alkyl esters, the fatty acids soaps, and the like. Specific examples of these well-known emulsifiers include dodecylbenzene sodium sulfonate, sodium butyl naphthalene sulfonate, sodium lauryl sulfate, disodium dodecyl diphenyl ether disulfonate, N-octadecyl disodium sulfosuccinate, and dioctyl sodium sulfosuccinate.

The emulsifying agents can be employed in varying amounts so long as adequate emulsification is achieved to provide graftable rubber substrates of the desired size and size distribution. As a general rule, the emulsifying agents are present in an amount of from 0.02 to 6.0 weight percent, preferably from 0.4 to 4.0 weight percent based on total weight of monomer to be polymerized.

Molecular weight modifiers may be employed in the polymerization step of the present invention. The molecular weight modifiers are present in an amount of from 0 percent to 10 percent by weight based upon the total weight of monomer to be polymerized.

Suitable molecular weight modifiers include N-octyl mercaptan, cyclohexyl mercaptan, dipentene dimercaptan, n-butyl mercaptan, n-dodecyl mercaptan, tertiary dodecyl mercaptan, isooctyl thioglycolate, penanyl mercaptan, pentaerythritoltetra(3-mercaptopropionate), ethyl cyclohexyl dimercaptan, allyl bromide, carbontetrachloride, bromotrichloromethane, and beta-bromostyrene. Other suitable molecular weight modifiers include: methyl mercaptan, ethyl mercaptan, 1-propyl mercaptan, 2-propyl mercaptan, 1-butyl mercaptan, 2-butyl mercaptan, 1-pentyl mercaptan, 2-pentyl mercaptan, 3-pentyl mercaptan, 1-hexyl mercaptan, 1-heptyl mercaptan, tertiary nonyl mercaptan, n-decyl mercaptan, secondary undecyl mercaptan, secondary dodecyl mercaptan and terpenes such as terpinolene and limonene and mixtures of the foregoing molecular weight modifiers.

Suitable free-radical generating initiators or catalysts include water-soluble persulfate or peroxy compounds and water-soluble redox systems, preferably potassium, sodium, or ammonium peroxydisulfate, or hydrogen peroxide, in combination with a reducing agent, such as sodium metabisulfite, sodium thiosulfate, sodium bisulfite, sodium formaldehyde sulfoxylate, sodium dithionite, sodium hypophosphite, ferrous sulfate, ferrous nitrate, and water-soluble amines, for example, triethylamine and triethanolamine, which act as an accelerator. The preferred water-soluble persulfate compound is sodium or potassium persulfate. Oil soluble initiators such as cumene hydroperoxide, azobisisobutyronitrile, tertiary butyl hydroperoxide, paramethane hydroperoxide, benzoyl peroxide, and the like, may be used.

Amount of free-radical generating initiator or catalyst used is within the limits considered normal for polymerization reactions of this type, i.e., between 0.01 and 5 weight percent preferably from 0.02 to 2.0 weight percent based on the total monomer to be polymerized.

Finally, the monomers from which the graftable rubber substrates are formed may contain other modifiers including plasticizers, stabilizers, lubricants, dyes, pigments, and fillers, provided they do not chemically react with or otherwise adversely affect the polymerization reaction used to form the graftable rubber substrates.

Polymerization of the monomers present in the aqueous suspension is then initiated. Polymerization is carried out under suitable conditions such as, for example, with agitation, at a temperature of from 0°C to 120°C, preferably from 50°C to 110°C, and autogenous pressure.

In some instances it may be desirable for the monomers from which the graftable rubber substrates are to be prepared to contain seed particles. The use of such seed particles is well-known by those skilled in the art. The presence of seed particles allows for more precise control of the particle size of the graftable rubber substrates. Typically, such seed particles have a diameter of about 500 Angstroms or less and comprise any material capable of nucleating the formation of the graftable rubber substrates. With the further limitations that the material comprising the seed particles not chemically interfere with the reaction used to form the graftable rubber substrates. Exemplary of materials suitable for use are polystyrene, interpolymers of acrylonitrile/butadiene/styrene, and the latex produced, prior to the addition of the second generally hydrophobic monomer mixture.

Polymerization of the monomers present in the aqueous suspension is allowed to continue until achieving a conversion of monomer to polymer of at least 40 percent preferably, 75 percent. The polymer thus produced constitutes the graftable rubber substrates. The graftable rubber substrates thus produced may be immediately grafted or, in the alternative, they may be stabilized and stored as a latex for future use, or the graftable rubber substrates may be steam stripped and recovered according to conventional means and stored in the form of a dried powder for future use.

The graftable rubber substrates have diameters ranging in size from 0.03 μm to 10 μm (300 to 100,000 Å) preferably from 0.06 to 4.0 μm (600 to 40,000Å) most preferably from 0.08—1.5 μm (800 to 15,000 Angstroms), the foregoing values being number average values.

The graftable rubber substrates are then subjected to a graft polymerization step wherein a superstrate of an interpolymer is grafted to the graftable rubber substrate. The interpolymer graft to the graftable rubber substrate is polymerized from a second monomer mixture comprising a monovinylidene aromatic monomer and one or more monomers copolymerizable therewith.

The monovinylidene aromatic monomers suitable for graft polymerization to the graftable rubber substrates are the same as those hereinbefore described as being suitable for inclusion in the first monomer mixture from which the interpolymer of the matrix is formed. The monomers copolymerizable with the monovinylidene aromatic monomers include the ethylenically unsaturated nitrile monomers and the monoethylenically unsaturated esters of carboxylic acid monomers.

Exemplary of the ethylenically unsaturated nitrile monomers suitable for copolymerization with the monovinylidene aromatic monomers are acrylonitrile, methacrylonitrile, ethacrylonitrile, and mixtures thereof. The preferred ethylenically unsaturated nitrile monomer is acrylonitrile.

Exemplary of the monoethylenically unsaturated esters of carboxylic acid monomers suitable for copolymerization with the monovinylidene aromatic monomers are methylacrylate, methyl methacrylate, ethylacrylate, ethyl methacrylate, 2-chloroethyl methacrylate, propyl acrylate or methacrylate, n-butyl acrylate or methacrylate, 2-ethyl hexyl acrylate, and the like. For reasons of cost and ease of use, the preferred monoethylenically unsaturated carboxylic acid monomer is methyl methacrylate.

The second monomer mixture suitably comprises a monovinylidene aromatic monomer un an amount of from 60 to 80 weight percent, preferably from 65 to 75 weight percent based on total weight of the second monomer mixture. It follows that the second monomer mixture comprises one or more monomers copolymerizable with the monovinylidene aromatic monomer in an amount of from 20 to 40 weight percent, preferably from 25 to 35 weight percent, based on total weight of the second monomer mixture.

In one preferred embodiment of the present invention, the monovinylidene aromatic monomer of the second monomer mixture is styrene, and the monomer copolymerizable therewith is acrylonitrile. In a second preferred embodiment to the present invention the monovinylidene aromatic monomer of the second monomer mixture is styrene, and the monomer copolymerizable therewith is methyl methacrylate.

The graftable rubber substrates are grafted with the interpolymer by techniques well-known in the art. Preferred are techniques which favor the formation of a rigid thermoplastic polymer shell around the graftable rubber substrates rather than discrete particles of interpolymer separate from the graftable rubber substrates. Typically, the monomers from which the interpolymer is polymerized are polymerized in the presence of an emulsion of the graftable rubber substrate.

The graft polymerization process in which the interpolymer is grafted to the graftable rubber substrate is allowed to continue until achieving a graft to rubber ratio (g/r) of from 0.1:1 to 0.3:1.

It has been found that polymeric polyblend compositions having lightly-grafted rubber-reinforcing particles (g/r of 0.1:1 to 0.3:1) have higher melt flow rate than compositions having heavier-grafted rubber-reinforcing particles without sacrificing gloss or toughness. Moreover, it has been found that when the lightly-grafted rubber-reinforcing particles have a graft to rubber ratio of from 0.1:1 to 0.3: polyblend compositions formed therefrom have tremendously enhanced environmental stress crack resistance in a trichlorofluoromethane atmosphere. This makes polymeric polyblend compositions formed therefrom well-suited for use in applications wherein the compositions contact trichlorofluoromethane and similar fluorocarbons (e.g., refrigerator liners).

As is known, the graft to rubber ratio (g/r) is the ratio of the weight of interpolymer grafted to the graftable rubber substrate (g), to the weight of the graftable rubber substrate to which the interpolymer is grafted (r). Methods for determining the g/r values for compositions such as those according to the present invention are generally well-known in the art. For example, ungrafted interpolymer can be separated from the graftable rubber substrates and grafted interpolymer by solvent extraction. For the purposes of this application, the solvent used was a solution comprising two parts by volume acetonitrile and one part by volume dimethyl formamide. After solvent extraction the remaining gel represents the graftable rubber substrates plus interpolymer grafted thereto. By knowing the percentage of graftable rubber substrates in the starting sample and the weight of the starting sample, the g/r value can be determined. The exact procedure used to determine the graft to rubber ratio is explained in greater detail in the examples of the present application.

The matrix and the lightly-grafted rubber reinforcing particles may be blended in a variety of ways to form the polymeric polyblend composition of the present invention. In one preferred embodiment of the present invention, the matrix and the lightly-grafted rubber-reinforcing particles are extrusion blended or mill rolled to form the compositions of the present invention.

The matrix is present in the polymeric polyblend compositions in an amount of from 50 to 99 weight percent, preferably from 55 to 95 weight percent based on total weight of the polymeric polyblend composition. The lightly-grafted rubber-reinforcing particles are present in the polymeric polyblend

EP 0 185 950 B1

composition in an amount such that the compositions have a rubber content of from 1 to 50 weight percent, preferably from 5 to 35 weight percent, based on total weight of the polymeric polyblend composition.

The lightly-grafted rubber-reinforcing particles present in the polymeric polyblend composition of the present invention have a broad particle size distribution. That is, that some of the lightly-grafted rubber-reinforcing particles have a relatively small particle diameter while some of the particles have a relatively large particle diameter. This broad particle size distribution has been found to produce polymeric polyblend compositions having desirable physical properties.

The lightly-grafted rubber-reinforcing particle having a relatively small particle diameter are easily produced by the process used to form the lightly-grafted rubber-reinforcing particles. In other words, the process hereinbefore set forth for producing the lightly-grafted rubber-reinforcing particles naturally produces lightly-grafted rubber reinforcing particles having a relatively small particle diameter. These relatively small particles have diameters of from 0.08 μm to 0.2 μm (800 to 2,000 Angstroms).

The lightly-grafted rubber-reinforcing particles having a relatively large particle diameter can be produced in a number of ways. Typically, the lightly-grafted rubber-reinforcing particles having a relatively large particle diameter are formed by the controlled agglomeration of graftable rubber substrates having a relatively small particle diameter, and subsequently grafting said agglomerated substrates. This controlled agglomeration can be achieved by a variety of methods. One such method is through the addition of so-called chemical agglomerating agents. This method and others like it are well-known to those skilled in the art.

In one embodiment of the present invention, the broad particle size distribution of the lightly-grafted rubber-reinforcing particles is achieved by forming the graftable rubber substrates through a process wherein the organic phase represents a major portion of the aqueous suspension (high monomer to water ratio) when polymerization of the graftable rubber substrates is begun. Additionally, the polymerization of the graftable rubber substrates is carried out in the presence of an amount of emulsifying agent which amount is insufficient to stabilize the latex of graftable rubber substrates is a shear field. This combination of polymerization conditions produces a latex of graftable rubber substrates having a broad particle size distribution, said latex is then grafted to produce a latex of lightly-grafted rubber-reinforcing particles having a broad particle size distribution.

In one preferred embodiment of the present invention, the lightly-grafted rubber-reinforcing particles having a relatively large particle diameter are formed through a process of melt agglomeration. For the purpose of this invention, the term melt agglomeration refers to a process in which the lightly-grafted rubber-reinforcing particles having a relatively small particle diameter are subjected to mechanical shear while in a heat plastified state which causes said particles to agglomerate into particles having a relatively large particle diameter. Additionally, the process of melt agglomeration causes a portion of the lightly-grafted rubber-reinforcing particles to form chains of interconnecting particles in some cases the chains of interconnecting particles form net-like structures of interconnected particle chains. These net-like structures have been observed in compositions according to present invention which possess enhance Environmental Stress Crack Resistance on exposure to an atmosphere of trichlorofluoromethane. This mechanical shearing while in a heat plastified state is efficiently and economically performed in a conventional melt processing step, such as extrusion or roll milling.

The lightly-grafted rubber-reinforcing particles having relatively large particle diameter suitably have a particle diameter of from 0.3 μm to 10 μm (3,000 to 100,000 Angstroms), preferably from 0.5 μm to 4.0 μm (5,000 to 40,000 Angstroms).

The compositions of the present invention are capable of being compounded with many other compositions. Those skilled in the art will recognize the desirability for forming such compounded compositions. Exemplary of such a compounded composition is a blend formed from a polymeric polyblend composition according to the present invention and an ABS resin, said resin having been produced in a mass, mass-suspension, or mass-solution process.

The following examples are intended as illustrations only, and are not to limit, in any manner, the invention as set forth in the claims.

Example 1

Into an agitated reactor was charged 789.26 kilograms of a butadiene/styrene/acrylonitrile (90/7/3) rubber latex (34.5 percent solids) said rubber latex having a mean particle diameter of 0.2835 μm (2,835 Angstroms), a gel content of 68.2 percent and a swell index of 27.2. The rubber latex was heated to 70°C. To the rubber latex was added an initiator shot comprising 5.52 kilograms of deionized water having dissolved therein 0.15 kilograms of sodium hydrosulfite, and 0.17 kilograms of sodium hydroxide. Immediately after the addition of the initiator shot, the continuous addition of an aqueous feed stream and a monomer feed stream was begun. The aqueous feed stream and monomer feed stream were added to the reactor over a period of four hours. The monomer feed stream comprised 120.39 kilograms of styrene, 46.82 kilograms of acrylonitrile, and 1.5 kilograms of N-octyl mercaptan. The aqueous feed stream comprised a mixture of 177.79 kilograms of deionized water, 0.753 kilograms of sodium persulfate, 0.567 kilograms of sodium bicarbonate, 0.208 kilograms of sodium hydroxide, 4.395 kilograms of an aqueous solution containing 43 weight percent of sodium dodecyl benzene sulfonate, and 0.121 kilograms of a 10 percent aqueous solution of disodium ethylene diamine tetraacetic acid.

6

After the addition of the aqueous feed stream and monomer feed stream was complete, the reaction was allowed to continue for one hour. At this time, a small amount of anti-foam agent was added to the latex and the latex was steam stripped to remove the residual monomers. The latex was then stabilized and the grafted rubber particles isolated by freeze coagulation. The grafted rubber particles were blended to 20 percent rubber with a styrene/acrylonitrile (SAN) copolymer comprising 71 weight percent styrene and 29 weight percent acrylonitrile based on total weight of SAN copolymer. The grafted rubber particles and SAN copolymer were blended in a Welding Engineers Twin Screw extruder. Various physical property tests were then performed on the blended composition.

Example 2

Into an agitated reactor was charged 907.19 kilograms of butadiene/styrene/acrylonitrile (90/7/3) rubber latex, said latex having a mean particle dcameter of about 0.2998 µm (2,998 Angstroms), a gel content of 83.3 percent and a swell index of 19.5. The rubber latex was heated to 70°C. To the rubber latex was added an initiator shot comprising 5.52 kilograms of deionized water, 0.15 kilograms of sodium hydrosulfite, and 0.17 kilograms of sodium hydroxide.

Immediately after the addition of the initiator shot, the continuous addition of an aqueous feed stream and a monomer feed stream was begun. The aqueous feed stream and monomer feed stream were added to the reactor over a period of about 4 hours. The monomer feed stream comprised 137.89 kilograms of styrene, 53.63 kilograms of acrylonitrile, and 1.73 kilograms N-octyl mercaptan. The aqueous feed stream comprised 177.79 kilograms deionized water, 0.73 kilograms of sodium persulfate, 0.567 kilograms of sodium bicarbonate, 0.28 kilograms of sodium hydroxide, 4.395 kilograms of an aqueous solution containing 43 weight percent of sodium dodecyl benzene sulfonate, and 0.121 kilograms of a 10 percent aqueous solution of disodium ethylene diamine tetraacetic acid.

After the addition of the aqueous feed stream and the monomer feed stream was complete, the reaction was allowed to continue for about one hour. At this time, a small amount of an anti-foam agent was added to the latex and the latex steam stripped to remove the residual monomers. The latex was then stabilized and the grafted rubber particles isolated by freeze coagulation. The grafted rubber particles were blended to 20 percent rubber in an SAN copolymer comprising 71 weight percent styrene and 29 weight percent acrylonitrile based on the total weight of SAN copolymer. The grafted rubber particles and SAN copolymer were blended in a Welding Engineers Twin Screw extruder. Various physical property tests were then performed on the blended composition.

Example 3

Into an agitated reactor was charged 907.19 kilograms of a butadiene/styrene/acrylonitrile (90/7/3) rubber latex, said latex having a mean particle diameter of 0.3469 µm (3,469 Angstroms), a gel content of 76.3 percent and swell index of 15.6. The rubber index was heated to 70°C. To the rubber latex was added an initiator shot comprising 5.52 kilograms of deionized water, 0.15 kilograms sodium hydrosulfite, and 0.17 kilograms of sodium hydroxide. Immediately after the addition of the initiator shot, the continuous addition of the aqueous feed stream and a monomer feed stream was begun. The aqueous feed stream and the monomer feed were added to the reactor over a period of about four hours. The monomer feed stream comprised 137.89 kilograms of styrene, 53.63 kilograms of acrylonitrile, and 1.73 kilograms of N-octyl mercaptan. The aqueous feed stream comprises 177.79 kilograms of deionized water, 0.753 kilograms of sodium persulfate. 0.567 kilograms of sodium bicarbonate, 0.208 kilograms of sodium hydroxide, 4.395 kilograms of an aqueous solution containing 43 weight percent of sodium dodecyl benzene sulfonate, and 0.121 kilograms of a 10 percent aqueous solution of disodium ethylene diamine tetraacetic acid.

After the addition of the aqueous feed stream and the monomer feed stream, the reaction was allowed to continue for one hour. At this time, a small amount of anti-foam agent was added to the latex and the latex stream stripped to remove the residual monomers. The latex was then stabilized and the grafted rubber particles isolated by freeze coagulation. The grafted rubber-reinforcing particles were blended to 20 percent rubber with an SAN copolymer comprising 71 weight percent styrene and 29 weight percent acrylonitrile based on total weight of the SAN copolymer. The grafted rubber particles and SAN copolymer were blended in a Welding Engineers Twin Screw Extruder. Various physical property tests were then performed on the blended compositions.

Example 4

Into an agitated reactor was charged 861.83 kilograms of butadiene/styrene/acrylonitrile (90/7/3) rubber latex, said latex having a mean particle diameter of 0.3537 µm (3.537 Angstroms), a gel content of 78.1 percent, and a swell index of 14.6. The rubber latex was heated to 70°C. To the rubber latex was added an initiator shot comprising 5.52 kilograms of deionized water, 0.15 kilograms sodium hydrosulfite, and 0.17 kilograms of sodium hydroxide. Immediately after the addition of the initiator shot, the continuous addition of an aqueous feed stream and a monomer feed stream was begun. The aqueous feed stream and monomer feed stream were added to the reactor over a period of about four hours. The monomer feed stream comprised 82.06, kilograms of styrene, 31.91 kilograms of acrylonitrile, and 1.02 kilograms of N-octyl mercaptan. The aqueous feed stream comprised 177.79 kilograms of deionized water, 0.753 kilograms of sodium persulfate, 0.56 kilograms of sodium bicarbonate, 0.208 kilograms of sodium hydroxide, 4.395 kilograms of an aqueous solution containing 43 weight percent of sodium dodecyl benzene sulfonate, and 0.121 kilograms of a 10 percent aqueous solution of disodium ethylene diamine tetraacetic acid.

After the addition of the aqueous feed stream and monomer feed stream, the reaction was allowed to continue for one hour. At this time, a small amount of an anti-foam agent was added to the latex and the latex stream stripped to remove the residual monomers. The latex was then stabilized and the grafted rubber particles isolated by freeze coagulation. The grafted rubber particles were blended to 20 percent total rubber with an SAN copolymer comprising 71 weight percent styrene and 29 weight percent acrylonitrile based on the total weight of SAN copolymer. The grafted rubber particles and SAN copolymer were blended in a Welding Engineers Twin Screw extruder. Various physical property tests were then performed on the blended composition.

The results of the various physical property tests run on the blended compositions prepared in Example 1—4 are set forth in Table No. I.

TABLE I

| Sample from Example No. | Mol. wt. of graft[1] | g/r[2] | Izod[3] | Gloss[4] | MFR[5] |
|---|---|---|---|---|---|
| 1 | 94.3 | 0.48/1 | 3.8 | 92 | 3.4 |
| 2 | 89.5 | 0.37/1 | 5.3 | 94 | 5.0 |
| 3 | * | 0.36/1 | 6.0 | 92 | 6.6 |
| 4 | * | 0.21/1 | 2.8 | 96 | 5.5 |

*Data not obtained.
[1] Molecular weight of styrene/acrylonitrile graft to the graftable rubber substrate (×1000).
[2] Graft to rubber ratio as determined by the method hereinbelow set forth.
[3] Notched Izod Impact Strength in ft-lbs per inch of notch according to ASTM D-256.
[4] Gloss as a percentage of reflected light.
[5] Melt flow rate in grams per 10 minutes according to ASTM D-1238, Condition I.

The following examples employ the same graftable rubber substrates, said graftable rubber substrates being prepared in the following manner.

An agitated reaction vessel was charged with 749.96 grams of deionized water, 0.49 grams of sodium bicarbonate, 0.74 grams of sodium persulfate, 0.15 grams of a 10 percent aqueous solution disodium ethylene diamine tetraacetic acid, and 33.95 grams of a seed latex (34.8 percent solids). The seed latex comprised a latex of polystyrene particles having an average particle diameter of 0.03 μm (300 Angstroms). The reactor was sealed and tested for leaks at 30°C. The reactor was purged of oxygen by pressurizing said reactor with nitrogen to about 413.68 kPa (60 psig) and then evacuating the nitrogen to a vacuum of about 200 mbar (150 mmkg). The process of pressurizing the reactor with nitrogen and evacuating was performed a total of three times.

After purging the reactor oxygen, 7.18 grams of acrylonitrile were added to the reactor. Immediately after the addition of acrylonitrile, 74 grams of a monomer mixture were added to the reactor. The monomer mixture comprised 4.9 parts styrene, 0.38 parts normal octyl mercaptan, 2.1 parts acrylonitrile, and 93.0 parts butadiene, all parts being per hundred parts monomer.

The temperature of the reactor was increased to approximately 65°C. A pressure drop of 68.95 kPa (10 psi) indicated initiation of the polymerization reaction. At this time, 419.87 grams of a monomer mixture were continuously added to the reactor at a rate of 52.48 grams per hour. The monomer mixture comprised 4.9 parts styrene, 0.38 parts N-octyl mercaptan, 2.1 parts acrylonitrile, and 93.0 parts butadiene, all parts being per hundred parts monomer. At the same time, the monomer mixture was being continuously added to the reactor, an aqueous mixture was being added to the reactor. The aqueous mixture was added to the reactor at a rate of 20.86 grams per hour until 125.16 grams of the aqueous mixture had been added to the reactor. The aqueous mixture comprised 90.09 grams of deionized water, and 34.34 grams of a 43 percent solution of sodium dodecyl benzene sulfonate.

The reaction was allowed to continue until the butadiene pressure within the reactor decreased to 137.90 kPa (20 psig). At this time, the contents of the reactor were steam stripped to remove the residual monomer.

Example 5

The graftable rubber substrates produced in the above-described manner were then grafted. To an agitated reaction vessel was added 1,404 grams of the graftable rubber substrate latex produced above. To the reactor is then added an agglomerating feed stream comprising 172.5 grams of deionized water, 2.34 grams of a 43 percent solution of sodium dodecyl benzene sulfonate, and 11.22 grams of an agglomerating latex, said latex being described in U.S.—A—4,419,496. The graftable rubber substrate latex had a solids content of 35 percent by weight. The contents of the reactor were agitated until 50 percent of he graftable rubber substrates had agglomerated to form particles 0.8 µm (8,000 Angstroms) in diameter.

To the agglomerated latex was then added a monomer feed stream and an aqueous feed stream. The monomer feed stream comprised 432 grams of styrene, 168 grams of acrylonitrile, and 2.7 grams of N-octyl mercaptan. The aqueous feed stream comprised 541.86 grams of deionized water, 0.72 grams of sodium persulfate, and 37.56 grams of a 43 percent solution of sodium dodecyl benzene sulfonate. The monomer feed stream and aqueous feed stream were added to the reactor continuously over a period of about six hours.

After the monomer feed stream and aqueous feed stream had been added to the reactor, the reaction was allowed to continue for one hour at 65°C. At this time, the material in the reactor was steam stripped of residual monomers and stabilized. This material represents the product of Example 5.

Example 6

The latex of graftable rubber substrate produced as described above, was grafted. To an agitated reaction vessel was added 1,404 grams of the latex of graftable rubber substrates, said latex having a solids content of 35 percent by weight The reactor was pressurized to 68.95 kPa (10 psig) with nitrogen and heated to 75°C.

To the material present in the reactor was added an agglomerating feed stream. The agglomerating feed stream comprised 172.5 grams of deionized water, 2.34 grams of a 43 percent solution of sodium dodecyl benzene sulfonate, and 11.22 grams of an agglomerating latex, said agglomerating latex being of the type described in U.S.—A—4,419,496. The addition of the agglomerating feed stream agglomerated 50 percent of the graftable rubber substrates present in the reactor into particles having a diameter of 0.8 µm (8,000 Angstroms).

To the partially agglomerated materials present in the reactor was added a monomer feed stream and an aqueous feed stream. The monomer feed stream comprised 432.0 grams of styrene, 168.0 grams of acrylonitrile, and 3.0 grams of N-octyl mercaptan.

The aqueous feed stream comprised 541.86 grams of deionized water, 37.56 grams of a 43 percent solution of sodium dodecyl benzene sulfonate, and 0.72 grams of sodium persulfate. The monomer feed stream and aqueous feed stream were simultaneously added to the reactor continuously over a period of about six hours.

A portion of the material in the reactor was removed one hour after the addition of the monomer feed stream and aqueous feed stream was begun. The material thus removed comprised a latex of lightly-grafted graftable rubber substrate and is the material designated as being produced in Example 6.

Example 7 and 8

The process set forth above in Example 5 was twice repeated. The material thus produced is designated as the material produced in Example 7 and Example 8, respectively.

Examples 9—11

The following procedures was performed three times with each run representing one of the examples.

The latex of graftable rubber substrates produced as described above was grafted. To an agitated reaction vessel was added 1,404 grams of the latex of graftable rubber substrates. The latex and graftable rubber substrate had a solid content of 35 percent by weight. The reactor was pressurized to 68.95 kPa (10 psig) with nitrogen and heated to 70°C. To the material present in reactor was added an agglomerating feed stream. The agglomerating feed stream comprised 172.4 grams of deionized water, 2.34 grams 43 percent solution of sodium dodecyl benzene sulfonate, and 11.22 grams of an agglomerating latex, said latex being described in U.S.—A—4,419,496. The addition of the agglomerating feed stream agglomerated 50 percent of the graftable rubber substrate present in the reactor into particles having a diameter of 0.8 µm (8,000 Angstroms).

After the desired degree of agglomeration was achieved a monomer feed stream and aqueous feed stream were simultaneously added to the reactor. The monomer feed stream comprised 432.0 grams of styrene, 168.0 grams of acrylonitrile, and 1.8 grams of N-octyl mercaptan. The aqueous feed stream comprised 541.86 grams of deionized water, 0.48 grams of sodum persulfate, and 37.56 grams of a 43 percent solution of sodium dodecyl benzene sulfonate. The aqueous feed stream and monomer feed stream were continuously added to the reactor over a period of about six hours. After the monomer feed stream and aqueous feed stream had been added to the reactor, the reaction was allowed to continue for one hour at 70°C. At this time, the latex present in the reactor was steam stripped of residual monomers and stabilized.

Example 12

The latex of graftable rubber substrate produced as described above, was grafted. To an agitated reaction vessel was added 1,404 grams of the latex of graftable rubber substrates, said latex having a solids content of 35 percent by weight. The reactor was pressurized to 68.95 kPa (10 psig) with nitrogen and heated to 75°C.

To the material present in the reactor was added an agglomerating feed stream. The agglomerating feed stream comprised 172.5 grams of deionized water, 2.34 grams of a 43 percent solution of sodium dodecyl benzene sulfonate, and 11.22 grams of an agglomerating latex, said agglomerating latex being of the type described in U.S.—A—4,419,496. The addition of the agglomerating feed stream agglomerated 50 percent of the graftable rubber substrates present in the reactor into particles having a diameter of 0.8 μm (8,000 Angstroms).

To the partially agglomerated materials present in the reactor was added a monomer feed stream and an aqueous feed stream. The monomer feed stream comprised 432.0 grams of styrene, 168.0 grams of acrylonitrile, and 3.0 grams of N-octyl mercaptan.

The aqueous feed stream comprised 541.86 grams of deionized water, 37.56 grams of a 43 percent solution of sodium dodecyl benzene sulfonate, and 0.72 grams of sodium persulfate. The monomer feed stream and aqueous feed stream were simultaneously added to the reactor continuously over a period of six hours.

After the addition of the monomer feed stream and aqueous feed stream had been completed, the reaction was allowed to continue for one hour at 75°C. At this time, the latex was removed from the reactor and steam stripped to remove residual monomers. The latex was then stabilized.

The latexes produced in Examples 5—12 were separately coagulated and dried to recover the lightly-grafted rubber-reinforcing particles. The lightly-grafted rubber-reinforcing particles thus recovered were then melt compounded to 20 percent total rubber into a styrene/acrylonitrile copolymer. The styrene/acrylonitrile copolymer comprised 72 percent by weight styrene, and 28 percent by weight acrylonitrile based on total weight of the styrene/acrylonitrile copolymer. Various physical propery tests were then performed on the blended compositions. The results of these test are set forth in Table No. II.

The graft to rubber ratio as set forth in Table Nos. I and II was determined in the following manner. One gram samples of the dried lightly-grafted rubber-reinforcing particles were dissolved in 35 milliliters of solvent, the solvent being 1 part by volume of dimethylformamide and two parts by volume acetonitrile. The solution was agitated for 16 hours after which time it was centrifuged at 19,000 revolutions per minute for two hours. The amount of soluble fraction (ungrafted SAN copolymer) was determined from the supernatant liquid. The amount of gel phase was determined by subtracting the weight of the soluble fraction from the total sample weight. The weight of the graft copolymer phase was determined as the weight of gel phase minus the calculated weight of rubber contained in the one grame sample.

The environmental stress crack resistance (ESCR) was determined in the following manner. The blended compositions produced above were compression molded into bars. The compression molded bars was 9.52 cm (3.75 inches) long, 1.27 cm (0.5 inches) wide, and 0.32 cm (0.125 inches) thick. The compression molded bars had semi-circular stress concentrators milled therein. The semi-circular stress concentrators were semi-circular in shape having a 0.40 cm (0.156 inch) radius. One of the semi-circular stress concentrators was milled into each of the longest (9.52 cm (3.75 inches)) edges of the compression molded test bar. The semi-circular stress concentrators were placed opposite one another, and were 3.50 cm (1.375 inches) from one of the ends of the compression molded test bars. The semi-circular stress concentrators were placed such that a radius drawn perpendicular to the noncurvilinear portion of the semi-circular stress concentrator was perpendicular to the longest edge of a test bar. The bar to be tested is placed in a glass chamber having an atmosphere of trichlorofluoromethane. One of the ends of the test bar not having a semi-circular stress concentrator milled therein is clamped to the top of the chamber. The end of the bar opposite the clamped end has a load of 1,135 kg (2,500 pounds) applied thereto. The time from the application of the load to the failure of the bar is measured.

TABLE II

| Composition from Example No. | Total percent rubber | G/R[1] | Time to fail[2] |
|---|---|---|---|
| 5 | 20 | 0.11 | 500 |
| 6 | 20 | 0.18 | 515 |
| 7 | 20 | 0.2 | 510 |
| 8 | 20 | 0.24 | 500 |
| 9 | 20 | 0.34 | 200 |
| 10 | 20 | 0.37 | 150 |
| 11 | 20 | 0.42 | 110 |
| 12 | 20 | 0.47 | 110 |

[1] Graft to rubber ratio.
[2] In minutes under a load of 1,135 kg (2,500 psig).

As can be seen from the above table, blended compositions wherein the lightly-grafted rubber-reinforcing particles have a graft to rubber ratio of about 0.2 exhibit excellent environmental stress crack resistance.

**Claims**

1. A polymeric polyblend composition comprising from 50 to 99 weight percent based on total weight of the polymeric polyblend composition of a matrix of an interpolymer being polymerized from a first monomer mixture comprising a monovinylidene aromatic monomer and one or more monomers copolymerizable therewith, said matrix having dispersed therein from 1 to 50 weight percent based on total weight of the polymeric polyblend composition a graft copolymer produced through an emulsion polymerization process, said graft copolymer comprising a graftable rubber substrate having grafted thereto an interpolymer, said interpolymer being polymerized from a second monomer mixture comprisinga monovinylidene aromatic monomer and one or more monomers copolymerizable therewith, said graft copolymer has a broad particle size distribution wherein relatively small particles have a diameter of from 0.08 μm to 0.2 μm (800 to 2000Å) and relatively large particles have a diameter of from 0.3 μm to 10 μm (300 to 100000Å), characterized in that the graftable rubber substrate is an interpolymer of 90 to 97 percent by weight butadiene and 3 to 10 percent by weight of acrylonitrile and/or styrene or a styrene derivative and the graft copolymer has a graft:rubber ratio of from 0.1:1 to 0.3:1.

2. The polyblend composition of Claim 1 wherein the monovinylidene aromatic monomer of the first and second monomer mixtures is styrene.

3. The polyblend of Claim 1 wherein the first and second monomer mixtures comprise systrene and acrylonitrile.

**Patentansprüche**

1. Polymerzusammensetzung aus einer Vielkomponentenmischung enthaltend 50 bis 99 Gew.-%, bezogen auf Gesamtgewicht der Polymerzusammensetzung aus einer Vielkomponentenmischung einer Matrix eines Mischpolymeren, das aus einer ersten Monomermischung polymerisiert wurde, die ein monovinylidenaromatisches Monomer und ein oder mehrere damit copolymerisierbare Monomere enthält, wobei in der Matrix dispergiert sind 1 bis 50 Gew.-%, bezogen auf Gesamtgewicht der Polymerzusammensetzung aus einer Vielkomponentenmischung eines durch Emulsionspolymerisation erhalten Pfropfcopolymeren, wobei das Pfropfcopolymere einen pfropfbaren Kautschukträger mit einem darauf gepfropften Mischpolymer enthält, das Mischpolymer aus einer zweiten Monomerischung polymerisiert wurde, die ein monovinylidenaromatisches Monomer und ein oder mehrere damit copolymerisierbare Monomere enthält, wobei das Pfropfcopolymer eine breite Teilchengrößenverteilung aufweist mit relativ kleinen Teilchen mit einem Durchmesser von 0,08 μm bis 0,2 μm (800 bis 2.000Å) und mit relativ großen Teilchen mit einem Durchmesser von 0,3 μm bis 10 μm (3.000 bis 100.000Å), dadurch gekennzeichnet, daß der pfropfbare Kautschukträger ein Mischpolymer ist aus 90 bis 97 Gew.-% Butadien und 3 bis 10 Gew.-% Acrylnitril und/oder Styrol oder einem Styrolderivat und das Pfropfcopolymer ein Verhältnis von Pfropfung:Kautschuk von 0,1:1 bis 0,3:1 aufweist.

2. Polymerzusammensetzung aus einer Vielkomponentenmischung nach Anspruch 1, dadurch

11

gekennzeichnet, daß das monovinylidenaromatische Monomer der ersten und zweiten Monomermischung Styrol ist.

3. Polymerzusammensetzung aus einer Vielkomponentenmischung nach Anspruch 1, dadurch gekennzeichnet, daß die erste und zweite Monomermischung Styrol und Acrylnitril enthalten.

**Revendications**

1. Composition polymélange polymère comprenant de 50 à 99% en poids par rapport au poids total de la composition polymélange polymère, d'une matrice d'un interpolymère obtenu par polymérisation à partir d'un premier mélange de monomères comprenant un monomère aromatique monovinylidène et un (ou plusieurs) monomère(s) copolymèrisable(s) avec lui, ladite matrice contenant en dispersion: de 1 à 50% en poids par rapport au poids total de la composition polymélange polymère, d'un copolymère greffé qu'on obtient par un procédé de polymérisation en émulsion, ledit copolymère greffé comprenant un substrat en caoutchouc susceptible de greffage portant un interpolymère greffé sur lui, ledit interpolymère étant polymérisé à partir d'un second mélange de monomères comprenant un monomère aromatique monovinylidène et un (ou plusieurs) monomère(s) copolymérisable(s) avec lui, ledit copolymère greffé présentant une large distribution de tailles de particules dans laquelle les particules relativement petites on un diamètre de 0,08 à 0,2 µm (800 à 2000Å) et les particules relativement grandes ont un diamètre compris entre 0,3 et 10 µm (3000 à 100.000Å), caractérisée en ce que le substrat en caoutchouc susceptible de greffage est un interpolymère de 90 à 97% en poids de butadiène et de 3 à 10% en poids d'acrylonitrile et/ou de styrène ou un dérivé de styrène, et le copolymère greffé comporte un rapport greffe/caoutchouc de 0,1:1 à 0,3:1.

2. Composition polymélange selon la revendication 1, dans laquelle le monomère aromatique monovinylidène des premier et second mélanges de monomères est le styrène.

3. Composition polymélange selon la revendication 1, dans laquelle les premier et second mélanges de monomères comprennent du styrène et de l'acrylonitrile.